# EUROPÄISCHE PATENTSCHRIFT

(11) **EP 3 084 255 B1**
(45) Veröffentlichungstag und Bekanntmachung des Hinweises auf die Patenterteilung: **07.02.2018**
(21) Anmeldenummer: 14808884.2
(22) Anmeldetag: 27.11.2014
(51) Int. Cl.: F16D 65/12

(54) **BREMSSCHEIBE MIT KÜHLELEMENTEN**
BRAKE DISK COMPRISING COOLING ELEMENTS
DISQUE DE FREIN ÉQUIPÉ D'ÉLÉMENTS REFROIDISSEURS

(30) Priorität: 20.12.2013 AT 508432013
(43) Veröffentlichungstag der Anmeldung: 26.10.2016
(73) Patentinhaber: Siemens AG Österreich, 1210 Wien (AT)
(72) Erfinder: ZENZ, Rüdiger, A-8020 Graz (AT)
(74) Vertreter: Maier, Daniel Oliver
(86) Internationale Anmeldenummer: PCT/EP2014/075777
(87) Internationale Veröffentlichungsnummer: WO 2015/090890

(56) Entgegenhaltungen:
- EP-A1- 0 170 298
- DE-A1-102009 027 116
- DE-B- 1 221 664
- FR-A- 1 048 935
- US-A- 3 314 509

## Beschreibung

### Technisches Gebiet

Die Erfindung betrifft eine Bremsscheibe für die Befestigung an einem Schienenrad, wobei die Bremsscheibe einseitig eine Vielzahl von länglichen Kühlelementen aufweist.

Dabei kann lediglich eine Bremsscheibe auf einer Seite eines Rades vorgesehen sein, oder es können zwei Bremsscheiben vorgesehen sein, auf jeder Seite des Rades eine. Denkbar sind auch mehrere konzentrische Bremsscheiben auf einer oder auf beiden Seiten des Rades, da die Bremsscheiben in der Regel kreisringförmig sind.

Das Rad ist bei Schienenfahrzeugen meist als Vollrad, nämlich als Scheibenrad, ausgebildet. Bei diesen umfasst der Radkörper den Radsteg und die Radnabe, die Bremsscheibe wird meist am Radsteg befestigt. Die Erfindung ist aber nicht auf die Anwendung bei Vollrädern beschränkt.

### Stand der Technik

In Schienenfahrzeugen kommen in der Regel mehrere Bremssysteme zur Anwendung, eine Bremssteuerung koordiniert das Zusammenspiel aller Bremssysteme. Das wichtigste Bremssystem ist dabei die Reibungsbremse. Diese wandelt die kinetische Energie eines Schienenfahrzeugs über zwei Reibpartner in Wärme um. Die Reibpartner bei Hochgeschwindigkeitszügen sind meist Bremsscheiben aus Stahl und Bremsbeläge aus Sintermetall, es können aber auch andere Materialien verwendet werden.

Die Bremsscheiben können dabei als Radbremsscheiben ausgeführt werden. Das Bremsmoment wird von der Bremsscheibe auf das Rad übertragen.

Bei einem Bremsvorgang wird durch Reibung eine sehr hohe Leistung in die Bremsscheibe in Form von Wärme eingebracht und diese muss anschließend abgeführt werden, da es sonst zu einer Überhitzung der Reibpartner kommen kann.

Bisher wurde dieses Problem dadurch gelöst, dass eine Seite der Bremsscheibe Kühlelemente aufweist. Diese Kühlelemente sind als radiale Kühlrippen ausgeführt und erstrecken sich radial über die gesamte Bremsscheibe, wie in der DE 102008003923 A1 beschrieben. Durch diese Kühlrippen entstehen jedoch Ventilationsverluste, die durch eine höhere Antriebsleistung kompensiert werden müssen.

Nachteilig an der beschriebenen Bremsscheibe mit den radialen Kühlrippen ist somit, dass sich die Ventilationsverluste in einem erhöhten Energiebedarf bei der Fortbewegung des zugehörigen Zuges gegenüber Zügen mit Bremsscheiben ohne Kühlrippen niederschlagen.

### Darstellung der Erfindung

Es ist eine Aufgabe der vorliegenden Erfindung, eine Bremsscheibe zur Verfügung zu stellen, mit welcher die in die Bremsscheibe eingebrachte Wärme als Wärmestrom an die Umgebungsluft abgeführt werden kann, wobei die Ventilationsverluste geringer sind als bei der Bremsscheibe mit radialen Kühlrippen aus dem Stand der Technik.

Diese Aufgabe wird gelöst durch eine Bremsscheibe für die Befestigung an einem Schienenrad, wobei die Bremsscheibe einseitig eine Vielzahl von länglichen Kühlelementen aufweist, mit den Merkmalen des Patentanspruchs 1. Vorteilhafte Ausgestaltungen der Erfindung sind in den jeweiligen abhängigen Ansprüchen definiert.

Dabei ist erfindungsgemäß vorgesehen, dass mehrere dieser Kühlelemente als Querelemente ausgebildet sind, deren Abmessung in radialer Richtung kleiner ist als normal zum Radius der Bremsscheibe an der Stelle des Querelements. Durch das Design mit mehreren länglichen Kühlelementen, die nun nicht mehr radial ausgerichtet sind, sondern deren Komponente normal zur radialen Richtung größer ist als jene in radialer Richtung, wird das Verhältnis von Wärmestrom zu Ventilationsverlusten verbessert, weil die Luft nicht so schnell in radialer Richtung nach außen strömen kann. Die in Kreisumfangsrichtung weisenden, etwa ebenfalls als Kühlrippen ausgebildeten Querelemente, ermöglichen zudem, bei Bewegung der Bremsscheibe um die Radachse, einen Luftkontakt ohne starke Luftverwirbelungen zu verursachen.

Insbesondere kann vorgesehen sein, dass die Querelemente tangential ausgerichtet sind. Tangential ist hier bezüglich eines zur Bremsscheibe konzentrischen Kreises zu verstehen, der das Querelement berührt.

Die Ausrichtung der länglichen Kühlelemente, die meist als Kühlrippe ausgebildet sein werden, bezüglich des Radius der Bremsscheibe bestimmt sich bei geraden Kühlelementen (rechteckig, elliptisch) nach der Ausrichtung ihrer Längsachse, bei gekrümmten Kühlelementen (z. B. einem Tragflächenprofil) nach ihrer Außenkontur an den Längsseiten.

In einer weiteren Ausführungsvariante der erfindungsgemäßen Bremsscheibe sind mehrere Querelemente auf einem Kreis mit Abstand zueinander angeordnet. Diese Abstände ermöglichen der Luft, sich zwischen den Querelementen hindurch radial nach außen zu bewegen und somit einen optimalen Kontakt zur Übertragung des Wärmestroms zu gewährleisten. Das Verhältnis vom gegenseitigen Abstand zwischen zwei Querelementen längs des Kreises zur Länge der Querelemente ist nicht so ausschlaggebend wie die Tatsache, dass der Strömungsquerschnitt über den Radius annähernd konstant sein oder sich vergrößern sollte, also dass radial aufeinander folgende Reihen bzw. Kreise von Querelementen Strömungskanäle freilassen, die radial nach außen nicht wesentlich schmäler, sondern eher breiter werden. Letzters bewirkt, dass zum Beispiel der Massenfluss durch die Strömungskanäle konstant bleibt, weil sich ja die Luft durch die Erwärmung an den Querelementen ausdehnt.

Durch mehrere Querelemente mit Abstand voneinander statt einer durchgehenden Kühlrippe kann auch Masse der Bremsscheibe eingespart werden.

In einer besonders bevorzugten Ausführungsvariante der erfindungsgemäßen Bremsscheibe sind alle auf einem Kreis angeordneten Kühlelemente als Querelemente ausgebildet. Diese Ausgestaltung bietet geringere Ventilationsverluste und damit einen geringeren Energieverbrauch des Zuges als es die bisher bekannte Bremsscheibe mit radialen Kühlrippen bietet.

Wenn nicht alle auf einem Kreis angeordneten Kühlelemente Querelemente sind, dann können zwischen den Querelementen auch radiale Kühlrippen und/oder Befestigungsabschnitte und/oder Zentrierelemente vorgesehen sein. Dadurch ist es möglich, Elemente, die andere Funktionen haben, wie beispielsweise das Befestigen der Bremsscheibe am Rad, zu integrieren.

In einer besonders bevorzugten Ausführungsvariante der erfindungsgemäßen Bremsscheibe sind die am weitesten innen liegenden Querelemente kürzer als die am weitesten außen liegenden Querelemente. Längere Querelemente tragen der sich aufgrund der Erwärmung ausdehnenden, die Querelemente umströmenden Luft Rechnung.

In einer weiteren Ausführungsvariante der erfindungsgemäßen Bremsscheibe sind die Querelemente mindestens um 60%, insbesondere um 90%, kürzer als die radiale Breite der Bremsscheibe. Die Länge der Querelemente beträgt also nur höchstens 40%, insbesondere nur höchstens 10% der radialen Breite der Bremsscheibe (die Breite des Kreisrings, der die Bremsscheibe bildet). Der Gedanke ist, dass der Massenstrom unter Berücksichtigung der erwärmten Luft über den Radius annähernd konstant bleibt, sich also die Strömungskanäle, welche durch die Zwischenräume der Querelemente gebildet werden, vorzugsweise radial nach außen erweitern.

Typische Abmessungen der als Querelemente ausgebildeten Kühlrippen sind eine Länge von 20-60mm, eine Breite von 8-15mm und eine Höhe von 20-30mm.

Eine weitere bevorzugte Ausführungsvariante der erfindungsgemäßen Bremsscheibe beinhaltet, dass der Querschnitt der Querelemente bei einem Schnitt parallel zur Ebene der Bremsscheibe rechteckförmig mit abgerundeten Ecken oder ovalförmig (z.B. elliptisch) ausgebildet ist. Dabei ist es auch möglich, dass die Form des Querelements dem Verlauf eines Kreises folgt, auf dem sich das Querelement befindet, also kreisbogenförmig ist. Oder das Querelement hat eine abweichend von der Kreisbogenform gebogene Form, etwa ein Tragflächenprofil. Eine längliche und an den Ecken abgerundete Form bietet einen geringeren Luftwiderstand, was sich in einem geringeren Energieverbrauch widerspiegelt.

In einer speziellen Ausführungsvariante kann zumindest ein Querelement als zur Bremsscheibe konzentrischer Kreisring ausgebildet sein. Es liegt somit ein Querelement mit maximaler Länge vor bzw. ein Sonderfall von mehreren Querelementen, die auf einem Kreis angeordnet sind und in Umfangsrichtung keinen Abstand zueinander haben, sondern ineinander übergehen.

In einer weiteren Ausführungsvariante der erfindungsgemäßen Bremsscheibe weist sie Befestigungsabschnitte zur Befestigung an einem Schienenrad auf. Durch diese Befestigungsabschnitte kann die Bremsscheibe stabil beispielsweise am Schienenrad befestigt werden.

In einer bevorzugten Ausführungsvariante der erfindungsgemäßen Bremsscheibe sind die Befestigungsabschnitte auf einem Kreis mit Abstand zueinander angeordnet, wobei zwischen zwei Befestigungsabschnitten ein oder mehrere Zentrierelemente vorgesehen sind. Die Zentrierelemente dienen dazu, die Bremsscheibe in entsprechenden Gegenstücken am Schienenrad in radialer Richtung zu führen.

In einer weiteren Ausführungsvariante der erfindungsgemäßen Bremsscheibe sind die Querelemente, die auf einander benachbarten Kreisen angeordnet sind, zueinander in Umfangsrichtung versetzt. Dies ermöglicht einen hohen Wärmeübergang bei gleichzeitig kleinen Ventilationsverlusten. Zwischen den Querelementen können sich dadurch etwa Bahnen oder Strömungskanäle für die Luftströmung ausbilden, die in einem Winkel zwischen 0 und 90°, insbesondere zwischen 30 und 60°, zur radialen Richtung angeordnet sind.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Die Zeichnungen sollen den Erfindungsgedanken zwar darlegen, ihn aber keinesfalls einengen oder gar abschließend wiedergeben. Es zeigt:
- Fig. 1: eine schematische Darstellung eines Ausschnitts einer erfindungsgemäßen Bremsscheibe mit Querelementen mit im Wesentlichen rechteckigem Querschnitt,
- Fig. 2: eine axonometrische Ansicht einer Bremsscheibe nach Fig. 1,
- Fig. 3: eine schematische Darstellung eines Ausschnitts einer erfindungsgemäßen Bremsscheibe mit Querelementen mit im Wesentlichen elliptischem Querschnitt,
- Fig. 4: eine axonometrische Ansicht einer Bremsscheibe nach Fig. 3.

### Ausführung der Erfindung

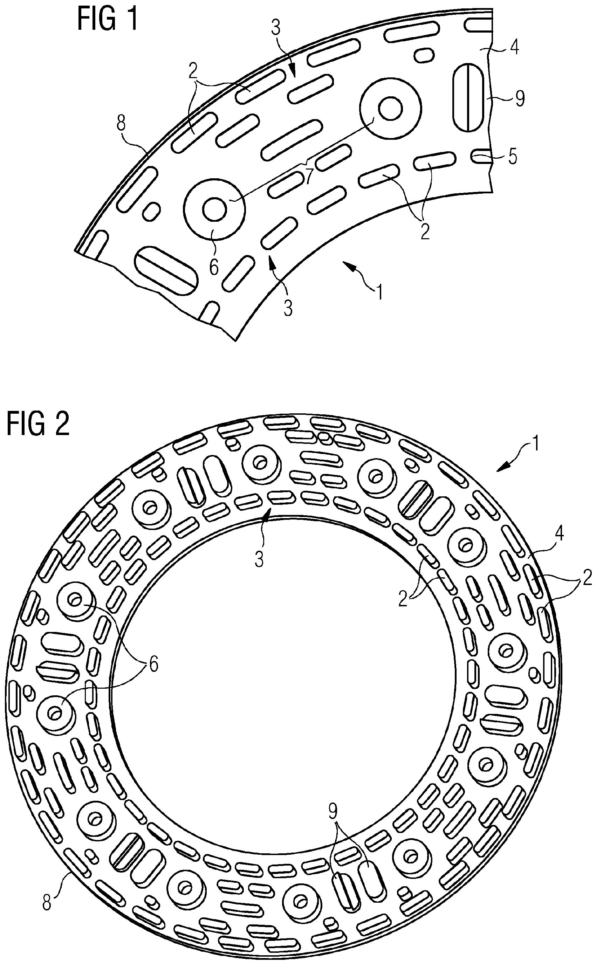

Figur 1 zeigt etwa ein Sechstel einer erfindungsgemäßen Bremsscheibe 1 mit mehreren Querelementen 2 als Kühlelementen, mehreren Zentrierelementen 9 und mehreren Befestigungsabschnitten 6. Es ist eine Oberfläche 4 und ein äußerer Rand 8 des als Kreisring ausgebildeten Bremsscheibe 1 zu sehen. Auf der Oberfläche 4 sind die tangential ausgerichteten Querelemente 2, die radial ausgerichteten Zentrierelemente 9 und die Befestigungsabschnitte 6 angeformt, also einteilig mit der Bremsscheibe 1 ausgebildet. Die länglich ausgeführten Kühlelemente sind als Querelement 2 so ausgerichtet, dass die Abmessung in radialer Richtung kleiner ist als normal zum Radius.

Bei einem Schnitt, welcher parallel zur Oberfläche 4 der Bremsscheibe 1 ausgeführt ist, durch die Querelemente 2, bei welchen die Abmessung in radialer Richtung kleiner ist als normal zum Radius, ergibt sich, in der Ebene des Schnittes, eine rechteckförmig ausgeführte Form. Dabei sind die Ecken 5 abgerundet.

Auf der Oberfläche 4 nahe dem äußeren Rand 8 sind die äußersten Querelemente 2 längs eines Kreises angeordnet. Dabei befindet sich zwischen den Querelementen 2 jeweils ein Abstand 3. Die auf dem nächsten, weiter innen liegenden Kreis angeordneten Querelemente 2 sind versetzt zu den Querelementen 2 der äußersten Bahn angeordnet und verdecken somit in radialer Richtung den Abstand 3, sind also länger als der Abstand zwischen den äußersten Querelementen. Dies setzt sich im Wesentlichen fort bis zum innersten Kreis von Querelementen 2.

Die Querelemente 2 auf der äußersten Kreisbahn sind länger ausgeführt als die Querelemente 2 auf der innersten Kreisbahn. Die zwischen den beiden Kreisbahnen liegenden Querelemente 2 sind unterschiedlich lang, je nach radialer Position. Für den Zwischenraum 7 zwischen zwei Befestigungsabschnitten 6 ist - sofern dort keine Zentrierelemente 9 vorgesehen sind - ein Querelement 2 vorgesehen, das länger ist als die radial außerhalb befindlichen Querelemente 2, weil hier kein Platz für drei entsprechend kurze Querelemente 2 ist - die Befestigungsabschnitte 6 bzw. auch die Zentrierelemente 9 sollen von den Querelementen 2 beabstandet sein.

Die Befestigungsabschnitte 6 sind als Befestigungsaugen ausgebildet und in regelmäßigen Abständen zueinander angeordnet. Dabei ergeben sich Zwischenräume 7 zwischen den Befestigungsabschnitten 6. Es ist abwechselnd ein Zwischenraum 7 mit Zentrierelementen 9 und dann ein Zwischenraum 7 mit den tangential angeordneten Querelementen 2 versehen.

Die Befestigungsabschnitte 6 sind hier kreisförmig ausgeführt und weisen in der Mitte eine Öffnung auf. Sie sind radial mittig auf der erfindungsgemäßen Bremsscheibe 1 angeordnet. Die Befestigungsabschnitte 6 können aber auch andere Formen als die Kreisform aufweisen.

Die Befestigung der erfindungsgemäßen Bremsscheibe 1 an einem Schienenrad erfolgt dabei so, dass die in Figur 1 abgebildete Oberfläche 4 dem Schienenrad zugewandt ist und die, in der Abbildung nicht sichtbare Unterseite, als Reibfläche für die Bremsbeläge dient. Die der Oberfläche 4 abgewandten Deckflächen der Querelemente 2, Zentrierelemente 9 und Befestigungsabschnitte 6 können dabei am Radkörper des Schienenrads an liegen, und zwar am Radsteg.

In Fig. 2 ist eine ganze, nach Fig. 1 ausgebildete Bremsscheibe dargestellt.

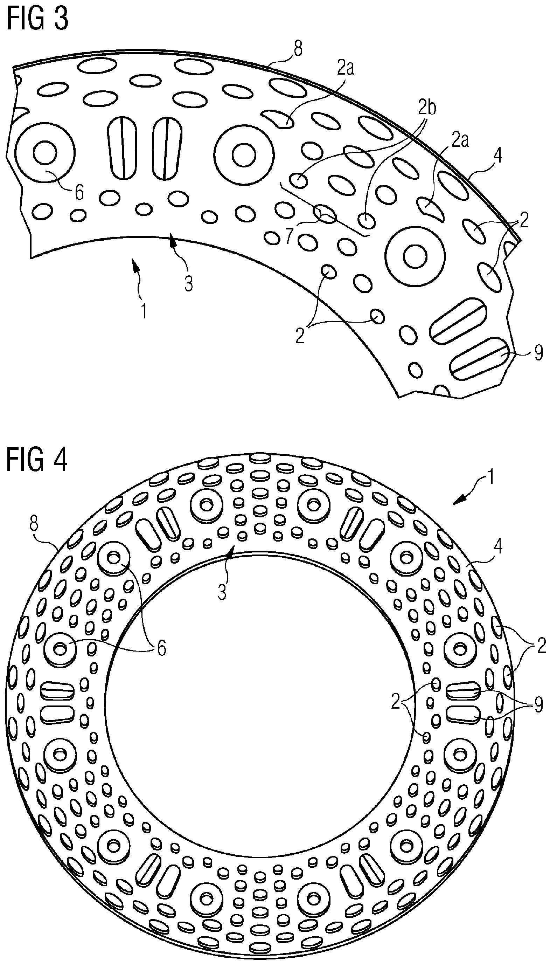

Fig. 3 entspricht von der Art der Darstellung der Figur 1, die Bremsscheibe ist jedoch in Fig. 3 hauptsächlich mit Querelementen 2 versehen, die einen ovalen (ellipsenförmigen) Querschnitt aufweisen. Bei einem Schnitt, welcher parallel zur Oberfläche 4 der Bremsscheibe 1 ausgeführt ist, durch die Querelemente 2, ergibt sich also, in der Ebene des Schnittes, eine Ellipsenform.

Während in Fig. 1 und 2 die Querelemente 2 immer einen so großen Abstand zueinander aufweisen, dass ein Teil der ebenen Oberfläche 4 zwischen ihnen liegt, ist in Fig. 3 bzw. 4 der Abstand der Querelemente 2 an vielen Stellen so klein, dass keine ebene Oberfläche 4 zwischen den Querelementen liegt.

Aus Platzgründen, weil ein Querelement 2 mit vollständig elliptischem Querschnitt nicht genügend Abstand vom Befestigungsabschnitt 6 hätte, haben manche Querelemente 2a einen Tragflächenquerschnitt, andere Querelemente 2b einen eiförmigen Querschnitt.

Die Querelemente 2a mit Tragflächenquerschnitt sind, anders als die übrigen Querelemente 2, 2b, nicht ausschließlich tangential ausgerichtet, sondern mit einer kleinen radialen Komponente versehen. Aufgrund der zum Zwischenraum 7 symmetrischen Anordnung der Querelemente 2a ist die Bremsscheibe 1 dennoch in beiden Drehrichtungen ohne Unterschiede verwendbar.

Auch die Querelemente 2b sind immer paarweise und symmetrisch zueinander, nämlich mit der Spitze zueinander, im Zwischenraum 7 angeordnet.

Es sind also in ihrer Längsrichtung selbst nicht symmetrische Querelemente 2a, 2b, die in ihrer Längsrichtung keine Eigensymmetrie aufweisen, zueinander paarweise symmetrisch (zu einem bestimmten Radius als Symmetrieachse) angeordnet. Querelemente ohne Eigensymmetrie könnten jedoch auch für bestimmte Anwendungen gleichsinnig, also translationssymmetrisch, angeordnet sein.

### Bezugszeichenliste:

- 1: Bremsscheibe
- 2: Querelement
- 2a: Querelement mit Tragflächenquerschnitt
- 2b: Querelement mit eiförmigem Querschnitt
- 3: Abstand
- 4: Oberfläche der Bremsscheibe
- 5: Ecke
- 6: Befestigungsabschnitt
- 7: Zwischenraum
- 8: äußerer Rand
- 9: Zentrierelement

## Patentansprüche

1. Bremsscheibe (1) für die Befestigung an einem Schienenrad, wobei die Bremsscheibe (1) einseitig eine Vielzahl von länglichen Kühlelementen (2, 9) aufweist, **dadurch gekennzeichnet, dass** mehrere dieser Kühlelemente als Querelemente (2) ausgebildet sind, deren Abmessung in radialer Richtung kleiner ist als normal zum Radius der Bremsscheibe (1) an der Stelle des Querelements (2).

2. Bremsscheibe (1) nach Anspruch 1, **dadurch gekennzeichnet, dass** die Querelemente (2) tangential ausgerichtet sind.

3. Bremsscheibe (1) nach Anspruch 1 oder 2, **dadurch gekennzeichnet, dass** mehrere Querelemente (2) auf einem Kreis mit Abstand (3) zueinander angeordnet sind.

4. Bremsscheibe (1) nach Anspruch 3, **dadurch gekennzeichnet, dass** alle auf einem Kreis angeordneten Kühlelemente als Querelemente (2) ausgebildet sind.

5. Bremsscheibe (1) nach einem der Ansprüche 1 bis 4, **dadurch gekennzeichnet, dass** die am weitesten innen liegenden Querelemente (2) kürzer sind als die am weitesten außen liegenden Querelemente (2).

6. Bremsscheibe (1) nach einem der Ansprüche 1 bis 5, **dadurch gekennzeichnet, dass** der Querschnitt der Querelemente (2) bei einem Schnitt parallel zur Ebene der Bremsscheibe (1) rechteckförmig mit abgerundeten Ecken (5) oder ovalförmig ausgebildet ist.

7. Bremsscheibe (1) einem der Ansprüche 1 bis 6, **dadurch gekennzeichnet, dass** zumindest ein Querelement als zur Bremsscheibe konzentrischer Kreisring ausgebildet ist.

8. Bremsscheibe (1) nach einem der Ansprüche 1 bis 7, **dadurch gekennzeichnet, dass** sie Befestigungsabschnitte (6) zur Befestigung an einem Schienenrad aufweist.

9. Bremsscheibe (1) nach Anspruch 8, **dadurch gekennzeichnet, dass** die Befestigungsabschnitte (6) auf einem Kreis mit Abstand zueinander angeordnet sind, wobei zwischen zwei Befestigungsabschnitten (6) ein oder mehrere Zentrierelemente (9) vorgesehen sind.

10. Bremsscheibe (1) nach einem der Ansprüche 3 bis 6, 8, 9, **dadurch gekennzeichnet, dass** die Querelemente (2), die auf einander benachbarten Kreisen angeordnet sind, zueinander in Umfangsrichtung versetzt sind.

## Claims

1. Brake disk (1) for fastening to a rail vehicle wheel, wherein the brake disk (1) comprises a plurality of elongated cooling elements (2, 9) on one side, **characterised in that** a plurality of said cooling elements is configured as transverse elements (2), the size thereof being smaller in the radial direction than perpendicular to the radius of the brake disk (1) at the location of the transverse element (2).

2. Brake disk (1) according to claim 1, **characterised in that** the transverse elements (2) are aligned tangentially.

3. Brake disk (1) according to claim 1 or 2, **characterised in that** a plurality of transverse elements (2) is arranged with a spacing (3) from one another on a circle.

4. Brake disk (1) according to claim 3, **characterised in that** all of the cooling elements arranged on a circle are configured as transverse elements (2).

5. Brake disk (1) according to one of claims 1 to 4, **characterised in that** the transverse elements (2) located furthest to the inside are shorter than the transverse elements (2) located furthest to the outside.

6. Brake disk (1) according to one of claims 1 to 5, **characterised in that** the cross section of the transverse elements (2) is configured to be rectangular with rounded corners (5) or ovoid in a section parallel to the plane of the brake disk (1).

7. Brake disk (1) according to one of claims 1 to 6, **characterised in that** at least one transverse element is configured as an annulus which is concentric to the brake disk.

8. Brake disk (1) according to one of claims 1 to 7, **characterised in that** said brake disk comprises fastening portions (6) for fastening to a rail vehicle wheel.

9. Brake disk (1) according to claim 8, **characterised in that** the fastening portions (6) are arranged with a spacing from one another on a circle, wherein one or more centring elements (9) are provided between two fastening portions (6).

10. Brake disk (1) according to one of claims 3 to 6, 8, 9, **characterised in that** the transverse elements (2) which are arranged on adjacent circles are offset relative to one another in the circumferential direction.

## Revendications

1. Disque de frein (1) destiné à être fixé sur une roue ferroviaire, ledit disque de frein (1) présentant sur un côté une pluralité d'éléments de refroidissement (2,9) allongés, **caractérisé en ce que** plusieurs de ces éléments de refroidissement sont réalisés sous la forme d'éléments transversaux (2), dont la dimension en direction radiale est inférieure à la normale par rapport au rayon du disque de frein (1) à l'emplacement de l'élément transversal (2).

2. Disque de frein (1) selon la revendication 1, **caractérisé en ce que** les éléments transversaux (2) sont alignés tangentiellement.

3. Disque de frein (1) selon la revendication 1 ou 2, **caractérisé en ce que** plusieurs éléments transversaux (2) sont disposés à distance (3) les uns des autres sur un cercle.

4. Disque de frein (1) selon la revendication 3, **caractérisé en ce que** tous les éléments de refroidissement disposés sur un cercle sont réalisés sous la forme d'éléments transversaux (2) .

5. Disque de frein (1) selon l'une des revendications 1 à 4, **caractérisé en ce que** les éléments transversaux (2) les plus à l'intérieur sont plus courts que les éléments transversaux (2) les plus à l'extérieur.

6. Disque de frein (1) selon l'une des revendications 1 à 5, **caractérisé en ce que** la section transversale des éléments transversaux (2) dans une coupe parallèle au plan du disque de frein (1) est de forme rectangulaire à coins arrondis (5) ou de forme ovale.

7. Disque de frein (1) selon l'une des revendications 1 à 6, **caractérisé en ce qu'**au moins un élément transversal est réalisé sous la forme d'un anneau de cercle concentrique au disque de frein.

8. Disque de frein (1) selon l'une des revendications 1 à 7, **caractérisé en ce qu'**il présente des parties de fixation (6) destinées à être fixées sur une roue ferroviaire.

9. Disque de frein (1) selon la revendication 8, **caractérisé en ce que** les parties de fixation (6) sont disposées à distance les unes des autres sur un cercle, entre deux parties de fixation (6) étant prévu(s) un ou plusieurs éléments de centrage (9).

10. Disque de frein (1) selon l'une des revendications 3 à 6, 8, 9, **caractérisé en ce que** les éléments transversaux (2) disposés sur des cercles voisins sont décalés les uns par rapport aux autres dans la direction circonférentielle.
